(19) **Europäisches Patentamt**

**European Patent Office**

**Office européen des brevets**

(11) **EP 1 342 802 A1**

(12) **EUROPEAN PATENT APPLICATION**

(43) Date of publication:
**10.09.2003 Bulletin 2003/37**

(51) Int Cl.7: **C22B 3/18**

(21) Application number: **02075908.0**

(22) Date of filing: **08.03.2002**

(84) Designated Contracting States:
**AT BE CH CY DE DK ES FI FR GB GR IE IT LI LU MC NL PT SE TR**
Designated Extension States:
**AL LT LV MK RO SI**

(71) Applicant: **Paques B.V.**
**NL-8560 AB Balk (NL)**

(72) Inventors:
- **Buisman, Cees Jan Nico**
  **8571 RH Harich (NL)**
- **Picavet, Merijn Amilcare**
  **8607 EJ Sneek (NL)**

(74) Representative: **van Westenbrugge, Andries et al**
**Nederlandsch Octrooibureau**
**P.O. Box 29720**
**2502 LS The Hague (NL)**

(54) **Process for the recovery of elemental sulphur from slurries containing metal sulphides and elemental sulphur**

(57) The invention provides a process for separating metal sulphides from elemental sulphur contained in a slurry, wherein the slurry can be divided into a first flow and a second flow, and

a) elemental sulphur from the first flow is biologically reduced to sulphide in the presence of an electron donor,
b) the slurry of the second flow, together with the effluent resulting from the first flow is contacted with the sulphide to solubilise the elemental sulphur as polysulphide,
c) the metal sulphides are separated from the solubilised elemental sulphur,
d) the polysulphide, from which the metal sulphides have been separated, is biologically oxidised to elemental sulphur,
e) the elemental sulphur thus formed is separated and
f) at least a part of the resulting liquid is returned to the slurry to be contacted with sulphide.

## Description

The invention relates to a process of extracting elemental sulphur ($S^0$) from slurries containing elemental sulphur and metal sulphides (MeS).

Slurries containing elemental sulphur and metal sulphides are generated in metal leaching processes such as fluoborate, direct and pressure leaching. In the case of fluoborate leaching of lead sulphide the following equation applies:

$$2Fe(BF_4)_3 + PbS \rightarrow 2Fe(BF_4)_2 + Pb(BF_4)_2 + S^0$$

Similar leaching processes are known in which lead is replaced by other (heavy) metals such as copper (Cu) or zinc (Zn). Since the leaching of the metal sulphide does not proceed quantitatively, a solid residue containing mainly elemental sulphur and some metal sulphides is produced. Due to the presence of sulphur, this residue cannot be reused in the leaching process, and thus the economy of the leaching process is lowered.

However, if the sulphur is removed, the metal sulphides become available again for production increasing the overall metal recovery. A feasible way to separate the solid elemental sulphur from the metal sulphides would be through dissolution of elemental sulphur as polysulphides using sulphide. The metal sulphides could then be separated and led back to the leaching step. This could be done using a chemical sulphide source, *e.g.* compressed $H_2S$, a sodium sulphide ($Na_2S$) solution or ammonium sulphide (($NH_4)_2S$). Such sulphur recovery processes using a $Na_2S$ solution have been described (Lei, K.P.V.; Recovery of sulphur and accessory metals from a leaching process residue; Report of investigations, United States Department of the Interior, Bureau of Mines; 8733). A drawback of such processes is that these sources require special handling and/or storage conditions due to toxicity or explosiveness.

It was found according to the invention, that metal sulphides can be effectively and safely separated from elemental sulphur using biologically produced (biogenic) $H_2S$. This has the main advantage that $H_2S$ is only produced on demand. No storage of $H_2S$ is required. Furthermore, the residue itself serves as feedstock, since it contains elemental sulphur.

Thus the process of the invention is characterised in that elemental sulphur is biologically reduced to sulphide in the presence of an electron donor, the slurry is contacted with the sulphide to solubilise the elemental sulphur, and the metal sulphides are separated from the solubilised elemental sulphur.

The reaction between sulphide and elemental sulphur leads to solubilisation of the sulphur in the form of polysulphides $S_n^{2-}$, resulting in the metal sulphide being the only non-dissolved, solid matter in the slurry or suspension.

After metal sulphides have been separated from the liquid, the polysulphides need to be converted to elemental sulphur again. This can be done through $H_2S$ stripping (either through acidification or using a carrier gas, or both) or by biological oxidation of polysulphides to sulphur. The latter has the advantage that alkalinity is produced leading to a higher pH. A high pH is beneficial for polysulphide stability and thus for a stable sulphur extraction.

The process of the invention for the recovery of elemental sulphur from leaching residues comprises the following process steps:

1. Biological production of hydrogen sulphide ($H_2S$) from elemental sulphur.
2. Extraction of the sulphur from the sulphur/metal sulphide slurry by dissolving the elemental sulphur as polysulphides ($S_n^{2-}$) using biogenic $H_2S$.
3. Metal sulphide separation from the liquid stream.
4. Biological polysulphide oxidation to elemental sulphur.
5. Elemental sulphur separation from the liquid stream.

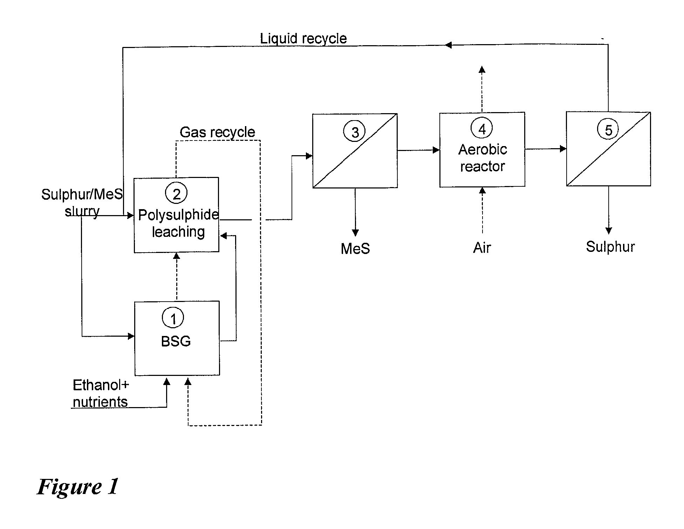

A schematic diagram of the total process is shown in the accompanying Figure 1.

Elemental sulphur is biologically converted to $H_2S$ by the Bio Sulphide Generator (BSG) (1). As the elemental sulphur source will usually not contain the necessary reduction equivalents, an external energy donor or electron donor will have to be added. The reaction ensuring sulphide production is the following:

$$S^0 + electron\ donor \rightarrow H_2S + oxidised\ products$$

The electron donor can be a fatty acid such as acetic acid ($CH_3COOH$), an alcohol, such as ethanol ($CH_3CH_2OH$) or other organic material such as carbohydrates, or hydrogen gas ($H_2$). The following equations apply:

$$4S^0 + CH_3COOH + 2H_2O \rightarrow 4H_2S + 2CO_2$$

$$6S^0 + CH_3CH_2OH + 3H_2O \rightarrow 6H_2S + 2CO_2$$

$$S^0 + H_2 \rightarrow H_2S$$

The selection of the electron donor depends on the sulphur loading rate. At low sulphur loads, e.g. below 10 kg/h, acetic acid is usually the electron donor of choice. At higher sulphur loads, from about 10 to about 400 kg/h, ethanol or a mixture of ethanol and acetic acid is preferred. At higher sulphur loads, hydrogen becomes economically attractive. The sulphur loading rate depends on the sulphide demand. The demand is determined by the amount of elemental sulphur present in the slurry and $H_2S$ demand elsewhere on site, *e.g.* for the precipitation of dissolved metals:

$$Me^{2+} + S^{2-} \rightarrow MeS$$

In this equation, *Me* denotes any divalent metal (having an insoluble sulphide) such as Co, Ni, Zn, Cu, Cd, Hg, Pb, and the like; for metals having other valencies, such as Ag and Al, similar equations apply, e.g. *2 Ag$^+$ + S$^{2-}$ → Ag$_2$S; 2 Al$^{3+}$ + S$^{2-}$ → Al$_2$S$_3$,* and the like.

The slurry to be treated can contain between 1 and 50 g elemental sulphur per liter. A typical sulphur load in the slurry is between 5 and 20 g/l, or around 1% w/v. In addition the slurry may contain between 0.5 and 20 g, usually between 2 and 10 g/l of insoluble metal sulphides. Thus a total sulphur load of e.g. 1000 kg $S^0$ per h will involve a liquid flow of about 100 m$^3$/h. The mixture of metal sulphides and elemental sulphur to be separated is usually supplied as a solid obtained by separation of metal sulphide precipitate from a metal precipitation installation. The mixture is passed to a slurry having the required concentration by dilution with water or, preferably, with liquid recycle from the sulphur separation step (5).

To ensure biogenic production of $H_2S$, nutrients necessary for biological growth and maintenance need to be provided. When acetic acid or ethanol is used, only a phosphorus source, a nitrogen source and some trace elements need to be provided. In the case of hydrogen gas a carbon source (e.g. acetic acid) needs to be added as well. A commonly used phosphorus source is phosphate ($PO_4^{3-}$). A commonly used nitrogen source is ammonium ($NH_4^+$). Commercially available nutrient mixtures, such as Nutrimix® (Paques) nutrient solution, can serve as a source for trace elements. The pH in the bioreactor can be about neutral, e.g. between 5 and 9, especially between 6 and 8. A pH controlling agent may added, e.g. in combination with the acetic acid or other nutrient. The total solids concentration is preferably between 5 and 20 g/l, which is adjusted, as necessary, by adding water as such or in combination with the nutrients.

The anaerobic biomass necessary for the biological production of sulphide from sulphur, can be obtained from common sources, e.g. existing sulphur-reducing or sulphide-oxidising bioreactors. These can comprise bacteria e.g. from the genera *Desulforomonas* or *Desulfotomaculum.* The bacteria may be mesophilic or thermophilic e.g. *Desulfotomaculum* KT7. Suitable bacteria are described in WO 00/29605.

The slurry containing the sulphur and metal sulphides can advantageously be separated into two streams. Thus, the elemental sulphur to be reduced to sulphide in the bioreactor is advantageously contained in the original MeS/sulphur slurry. In this embodiment, the bioreactor is also fed with metal sulphides (MeS). To prevent excessive accumulation of inert materials such as MeS in the bioreactor, some bioliquor has to be bled to the polysulphide leaching. Separators keeping the biomass in the sulphide generating reactor may be provided, especially with high-capacity generators using hydrogen as the electron donor. $H_2S$ is stripped from the reactor by means of a gas recycle using a carrier gas such as nitrogen or hydrogen. The carrier gas may also advantageously contain carbon dioxide, e.g. between 1% and 25%, which increases the buffering capacity of the reactor contents. In case of hydrogen, carbon dioxide may originate from the reformer producing the hydrogen. The hydrogen sulphide is led from the reactor to the polysulphide leaching contactor (2).

The slurry containing metal sulphides and elemental sulphur is contacted with the biogenic hydrogen sulphide gas (or a liquid form of sulphide) in the contactor under turbulent conditions (step 2). The elemental sulphur present reacts with sulphide to form polysulphides, which are soluble in water. The general reaction is the following

$$nS^0 + S^{2-} \rightarrow S_{n+1}^{2-}$$

Herein *n* ranges from 1 to 5. In practice, *n* will preferably be 4, since $S_5^{2-}$ is the most stable polysulphide. Therefore, it is highly advantageous to divide the original metal sulphide / sulphur slurry into two streams in such a ratio, that the amount of sulphide produced from the stream fed to the bioreactor corresponds to the preferred value of *n*. Preferably, the ratio between the first stream (fed to the bioreactor 1) and the second flow (directly fed to the contactor 2) is between 10:90 and 33:67, in particular between 15:85 and 25:75. This most preferred division of the sulphur containing slurry is about 20% being fed to the bioreactor 1 and about 80% being directly fed to the contactor 2.

The pH in the contactor is preferably alkaline, e.g. between 8 and 10. Therefore it is preferred that the part of the MeS/sulphur slurry (ideally about 80%) to be contacted is mixed with an alkaline recycle coming from oxidation step (4) or sulphur separation step (5).

After the contacting step (2), solid metal sulphides can be separated from the sulphur containing liquid in separation step (3), provided the polysulphides are sufficiently stable to avoid precipitation thereof. Conventional separators can be used in separation step 3, e.g. so-called Tilted Plate Separators (TPS) or thickeners. As polysulphides are unstable at low pH, the liquid in the separator (3) should be sufficiently alkaline, especially pH 8 or higher. Recycling liquid originating from the biological oxidation of polysulphides to elemental sulphur (step 4) ensures an alkaline pH, since this oxidation is an alkalinity producing reaction:

$$S_{n+1}{}^{2-} + {}^1/_2\ O_2 + H_2O \rightarrow (n + 1)S^0 + 2OH^-$$

The biologial oxidation of polysulphide to sulphur can be performed as known in the art, using common sulphide-oxidising bacteria such as from the genera *Thiobacillus, Thiomicrospira, Sulfolobus* and *Thermothrix.* The biological oxidation of sulphur is described e.g. in WO 91/16269 and WO 94/29227. After the polysulphides have been oxidised, solid elemental sulphur is separated (step 5), e.g. using Tilted Plate Separators, and the remaining alkaline liquid is recirculated to the polysulphide leaching. The pH of the alkaline liquid issuing form (5) will range from 8.5 to 9.5. The liquid is preferably largely returned to the sulphur leaching step (20), in particular a proportion of between 50 and 95 % of the total liquid, preferably of between 70 and 90 % of the liquid resulting form (5).

The metal sulphides separated from the solubilised sulphur can be returned to the metal recovery process.

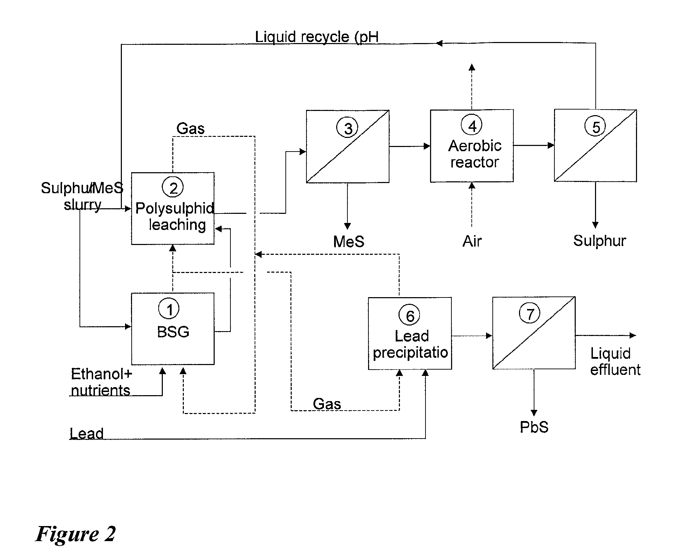

Where the slurry containing metal sulphides and sulphur is produced at a site where metal separation by sulphide precipitation is carried out, the sulphide generator may also be used to provide liquid sulphide or gaseous hydrogen sulphide for the precipitation installation as depicted in figure 2 as reactor (6). The capacity of the sulphide generator may then be increased relative to the capacity need for the contactor (2) from between 15:85 and 25:75 without the metal precipitation to between 20:80 and 40:60 with metal precipitation.

Sulphur removal efficiencies that can be achieved using the process of the invention can be about 95% or higher, up to about 98 %. The process of the invention is furthermore advantageous in using a relatively simple flow sheet as depicted in figures 1 and 2.

*Example:*

Two streams that need to be treated are characterised as follows:

| **1)** 12054 tpy (33 tpd) of final residue (sulphur containing slurry): | | |
|---|---|---|
| Pb | 8% | (960 tpy Pb) |
| Zn | 3% | (360 tpy Zn) |
| Cu | 2% | (240 tpy Cu) |
| Fe | 6% | (720 tpy Fe) |
| Sulphur | 70% | (8430 tpy S) |
| remainder: water, salts etc. | | |

| **2)** Lead bleed: | |
|---|---|
| Dissolved Pb | 140 g/l |
| To be recovered | 2500 tpy Pb |
| Flow to be treated | 49 m3/d |

The process of the present invention is well suited for this case and comprises seven main process steps:

1. Biological hydrogen sulphide ($H_2S$) production from elemental sulphur
2. Leaching of the final residue with $H_2S$ in order to dissolve sulphur in the form of polysulphide
3. Separation of metal sulphides from polysulphides
4. Biological oxidation of polysulphides into elemental sulphur
5. Separation of formed sulphur
6. Contacting the lead bleed stream with $H_2S$ gas in order to form PbS
7. Separation of PbS formed.

A schematic diagram of the total process is shown in Figure 2.

ad 1) The sulphur and metal sulphides containing slurry is separated into two streams. About 20% is led to the Bio Sulphide Generator (BSG) (1) in which the elemental sulphur present is biologically converted into $H_2S$ using ethanol:

$$6S^0 + CH_3CH_2OH + 3H_2O \rightarrow 6H_2S + 2CO_2$$

$H_2S$ is stripped from the reactor by means of a gas recycle and led to the lead precipitation contactor (6) and polysulphide leaching contactor (2).

ad 2) In this unit the rest of the sulphur/MeS slurry (80%) is contacted with the hydrogen sulphide gas. The elemental sulphur present reacts with sulphide to form polysulphides, which are soluble in water. The main reaction is the following:

$$4S^0 + Na_2S \rightarrow Na_2S_5$$

ad 3) Subsequently, the solid metal sulphides are separated from the sulphur containing liquid.

ad 4) Here, polysulphide oxidation to elemental sulphur takes place ensuring an alkaline pH needed for polysulphide stability:

$$Na_2S_5 + {}^1/_2O_2 + H_2O \rightarrow 5S^0 + 2NaOH$$

ad 5) After the polysulphides have been oxidised, solid elemental sulphur is separated and the remaining alkaline liquid (~pH 9) is recirculated to the polysulphide leaching.

ad 6) The rest of the hydrogen sulphide produced in the BSG (1) is used for recovering lead present in the bleed stream from the lead production. This is done through precipitation according to the following reaction:

$$Pb^{2+} + S^{2-} \rightarrow PbS$$

ad 7) Lead sulphide is subsequently separated after which a liquid effluent remains.

*Comparative example*

For this example another process for elemental sulphur recovery was considered. Instead of biogenic sulphide, ammonium sulphide ($(NH_4)_2S$) was proposed as leaching agent. After metal sulphides have been removed from the polysulphide solution, $(NH_4)_2S$ is regenerated through steam stripping and led back to the sulphur leaching. Basically, in step 2 ammonium sulphide is used for sulphur dissolution and the aerobic reactor in step 4 is replaced by a steam stripping step. The operational costs are much higher in this example than in the process of the invention, because of the supply of ammonium sulphide and steam generation. In case that an additional lead sulphide precipitation is required, a BSG is still necessary, and its sulphur feed comes from step 5, the obtained sulphur slurry after steam stripping. This further adds to the costs which are avoided by using the process of the invention.

**Claims**

1. A process for separating metal sulphides from elemental sulphur contained in a slurry, *characterised* in that

   a) elemental sulphur is biologically reduced to sulphide in the presence of an electron donor,
   b) the slurry is contacted with the sulphide to solubilise the elemental sulphur as polysulphide,
   c) the metal sulphides are separated from the solubilised elemental sulphur,
   d) the polysulphide, from which the metal sulphides have been separated, is oxidised to elemental sulphur,
   e) the elemental sulphur thus formed is separated and
   f) at least a part of the resulting liquid is returned to the slurry to be contacted with sulphide.

2. A process according to claim 1, in which the electron donor is an alcohol, a fatty acid or hydrogen.

3. A process according to claim 1 or 2, in which the elemental sulphur to be reduced is the elemental sulphur present in the slurry.

4. A process according to claim 3, in which the slurry is divided into a first flow which is subjected to biological reduction and is subsequently contacted with sulphide, and a second flow which is directly contacted with sulphide.

5. A process according to claim 4, in which the ratio between the first flow and the second flow is between 10:90 and 33:67, in particular between 15:85 and 25:75.

6. A process according to any one of claims 1-5, in which the sulphide is fed to the slurry as gaseous hydrogen sulphide.

7. A process according to any one of claims 1-6, in which the pH in the slurry before separation of the metal sulphides is adjusted between 8 and 10, in particular between 8.5 and 9.5.

8. A process according to any one of claims 1-7, in which the polysulphide, from which the metal sulphides have been separated, is biologically oxidised using sulphide-oxidising bacteria.

9. A process according to any one of claims 1-8, wherein the part of the resulting liquid returned to the slurry is between 50 and 95 % of the resulting liquid.

*Figure 1*

*Figure 2*

**European Patent Office**

## EUROPEAN SEARCH REPORT

Application Number

EP 02 07 5908

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A,D | WO 94 29227 A (PACQUES BV ;BUISMAN CEES JAN NICO (NL))<br>22 December 1994 (1994-12-22)<br>* Claims; p.4, 1.18-28 * | 1-9 | C22B3/18 |
| A | EP 1 114 873 A (PAQUES BIO SYST BV)<br>11 July 2001 (2001-07-11)<br>* Claim 1; col.2, 1.14-48 * | 1-9 | |
| A,D | WO 00 29605 A (BUISMAN CEES JAN NICO ;DIJKMAN HENK (NL); PAQUES BIO SYST BV (NL)) 25 May 2000 (2000-05-25)<br>* Claim 1; p.3, 1.22-26 * | 1-9 | |
| A | WO 97 29055 A (THIOPAQ SULFUR SYSTEMS B V ;BUISMA CEES JAN NICO (NL); DIJKMAN HEN) 14 August 1997 (1997-08-14)<br>* Claims; p.4, 1.4-22 * | 1-9 | |

TECHNICAL FIELDS
SEARCHED      (Int.Cl.7)

C22B

The present search report has been drawn up for all claims

| Place of search | Date of completion of the search | Examiner |
|---|---|---|
| MUNICH | 25 July 2002 | Bjoerk, P |

EPO FORM 1503 03.82 (P04C01)

EP 1 342 802 A1

**ANNEX TO THE EUROPEAN SEARCH REPORT
ON EUROPEAN PATENT APPLICATION NO.**  EP 02 07 5908

This annex lists the patent family members relating to the patent documents cited in the above-mentioned European search report.
The members are as contained in the European Patent Office EDP file on
The European Patent Office is in no way liable for these particulars which are merely given for the purpose of information.

25-07-2002

| Patent document cited in search report | | Publication date | Patent family member(s) | | Publication date |
|---|---|---|---|---|---|
| WO 9429227 | A | 22-12-1994 | NL | 9301000 A | 02-01-1995 |
| | | | AT | 148082 T | 15-02-1997 |
| | | | AU | 673753 B2 | 21-11-1996 |
| | | | AU | 6937994 A | 03-01-1995 |
| | | | BG | 61602 B1 | 30-01-1998 |
| | | | BG | 100205 A | 29-11-1996 |
| | | | BR | 9406771 A | 27-02-1996 |
| | | | CA | 2164090 A1 | 22-12-1994 |
| | | | CN | 1125432 A ,B | 26-06-1996 |
| | | | CZ | 9503249 A3 | 17-04-1996 |
| | | | DE | 69401586 D1 | 06-03-1997 |
| | | | DE | 69401586 T2 | 22-05-1997 |
| | | | DK | 702663 T3 | 30-06-1997 |
| | | | EP | 0702663 A1 | 27-03-1996 |
| | | | ES | 2096474 T3 | 01-03-1997 |
| | | | FI | 955915 A | 08-12-1995 |
| | | | HU | 77974 A2 | 28-01-1999 |
| | | | JP | 2693272 B2 | 24-12-1997 |
| | | | JP | 8506271 T | 09-07-1996 |
| | | | WO | 9429227 A1 | 22-12-1994 |
| | | | NO | 954862 A | 08-12-1995 |
| | | | PL | 311869 A1 | 18-03-1996 |
| | | | RU | 2109692 C1 | 27-04-1998 |
| | | | US | 5637220 A | 10-06-1997 |
| EP 1114873 | A | 11-07-2001 | EP | 1114873 A1 | 11-07-2001 |
| WO 0029605 | A | 25-05-2000 | AU | 1297700 A | 05-06-2000 |
| | | | BR | 9915367 A | 14-08-2001 |
| | | | CN | 1326512 T | 12-12-2001 |
| | | | EP | 1131459 A1 | 12-09-2001 |
| | | | WO | 0029605 A1 | 25-05-2000 |
| WO 9729055 | A | 14-08-1997 | AT | 207453 T | 15-11-2001 |
| | | | AU | 719886 B2 | 18-05-2000 |
| | | | AU | 1674297 A | 28-08-1997 |
| | | | CN | 1210503 A ,B | 10-03-1999 |
| | | | DE | 69707646 D1 | 29-11-2001 |
| | | | DE | 69707646 T2 | 08-05-2002 |
| | | | EP | 0880475 A1 | 02-12-1998 |
| | | | ES | 2162241 T3 | 16-12-2001 |
| | | | WO | 9729055 A1 | 14-08-1997 |
| | | | RU | 2178391 C2 | 20-01-2002 |
| | | | ZA | 9700979 A | 18-08-1997 |